Europäisches Patentamt

European Patent Office

Office européen des brevets

(19)

(11) Veröffentlichungsnummer: **0 099 419**

**A1**

(12) **EUROPÄISCHE PATENTANMELDUNG**

(21) Anmeldenummer: **82106590.1**

(22) Anmeldetag: **21.07.82**

(51) Int. Cl.³: **B 29 B 1/06**

(43) Veröffentlichungstag der Anmeldung:
**01.02.84 Patentblatt 84/5**

(84) Benannte Vertragsstaaten:
**AT BE CH DE FR GB IT LI LU NL SE**

(71) Anmelder: **Kimmel, Hans**
**Papenbergweg 2b**
**D-4930 Detmold(DE)**

(72) Erfinder: **Kimmel, Hans**
**Papenbergweg 2b**
**D-4930 Detmold(DE)**

(74) Vertreter: **Körner, Ekkehard, Dipl.-Ing. et al,**
**Patentanwälte Müller-Börner, Wey & Körner**
**Widenmayerstrasse 49**
**D-8000 München 22(DE)**

(54) Verfahren zum Aufheizen und anschliessendem Abkühlen von rieselfähigem Gut.

(57) Es wird ein Verfahren zum Aufbereiten von schüttfähigem Gut, insbesondere von Kunststoffpolymerisatpulver, beschrieben, bei dem das Gut zunächst durch Friktionswärme erwärmt und anschließend gekült wird. Durch Verringerung des Umgebungsdrucks beim Heizen und Steigern des Umgebungsdrucks beim Kühlen wird eine Vergrößerung von Aufheiz- und Abkühlungsgeschwindigkeit erreicht.

EP 0 099 419 A1

PATENTANWÄLTE

*Müller-Börner, Wey & Körner*

D-8 MÜNCHEN 22 · WIDENMAYERSTRASSE 49          D-1 BERLIN-DAHLEM 83 · PODBIELSKIALLEE 68

BERLIN:     DIPL.-ING. R. MÜLLER-BÖRNER

MÜNCHEN:   DIPL.-ING. HANS-HEINRICH WEY

DIPL.-ING. EKKEHARD KÖRNER

0099419

Hans Kimmel

## Verfahren zum Aufheizen und anschließendem Abkühlen von rieselfähigem Gut

Die Erfindung bezieht sich auf ein Verfahren und eine Vorrichtung zum Aufheizen und anschließendem Abkühlen von rieselfähigem Gut, insbesondere von Kunststoffpolymerisatpulver.

Bei der Aufbereitung von Kunststoffpolymerisatpulver, insbesondere PVC-Pulver, wird das pulverförmige Rohmaterial mit Zuschlagstoffen, wie Wachsen, Pigmenten, Weichmachern und dgl., versetzt und zu Agglomeraten verarbeitet, die ihrerseits Zwischenmaterial für die Weiterverarbeitung in Extrudern, Spritzvorrichtungen und dgl. sind. Die Aufbereitung zu Agglomeraten erfolgt durch Erwärmen und abschließendes Abkühlen des mit den Zuschlagstoffen versehenen PVC-Pulvers in Mischbehältern. Dabei wird die Wärme in modernen Schnellmischern allein durch Friktion mittels eines schnell umlaufenden Mischflügels in das Mischgut eingebracht. Nach ausreichender Agglomerierung des Mischguts wird dieses möglichst schnell abgekühlt, da das Material

MÜNCHEN: TELEFON (089) 225585          BERLIN:   TELEFON (030) 8312088
KABEL: PROPINDUS · TELEX 0524244       KABEL: PROPINDUS · TELEX 0184057

im warmen Zustand zur Klumpenbildung und Klebrigkeit neigt, die seine technischen Eigenschaften nachteilig beeinflussen. Zur Abkühlung des Gutes zieht man dieses aus dem Schnellmischer ab und überführt es in einen Kühlmischer, der ein gegenüber dem Schnellmischer größeres Volumen aufweist und somit dem zu kühlenden Gut relativ große gekühlte Flächen anbieten kann. In dem Kühlmischer wird das Gut schonend umgeschichtet, um die Agglomerate nicht zu zerschlagen.

Diese Technik ist die allgemein praktizierte und wohlbekannt. Nachteilig an ihr ist der relativ große apparative Aufwand. Es wird eine Heiz-Kühlmischer-Kombination benötigt, die relativ voluminös ist und die schlecht ausgenutzt ist, weil die Bearbeitungszeiten in Heiz- und Kühlmischer sehr voneinander differieren. Der Heizmischer ist einen Großteil der Zeit ungenutzt. Weiterhin wird eine relativ aufwendige Überführungseinrichtung zwischen Heiz- und Kühlmischer benötigt. Die Mischer müssen etagenartig übereinander angeordnet sein, um eine Überführung des Mischguts vom Heizmischer in den Kühlmischer auf kurzem Wege zu ermöglichen.

Versuche, Heizen und Kühlen des Gutes in ein und demselben Behälter durchzuführen, sind bislang nicht erfolgreich gewesen, weil sich entweder das Gut nicht schnell genug aufheizen oder nicht schnell genug abkühlen ließ.

Der Erfindung liegt die Aufgabe zugrunde, ein Verfahren nach dem Oberbegriff des Patentanspruchs 1 anzugeben, mit dessen Hilfe es möglich ist, die Aufheizgeschwindigkeit und/oder die Abkühlgeschwindigkeit so zu steigern, daß Aufheizen und Abkühlen des Gutes in ein und demselben Behälter durchgeführt werden können.

Diese Aufgabe wird durch die kennzeichnenden Merkmale des Patentanspruchs 1 gelöst. Weiterbildungen des Verfahrens und Vorrichtungen zur Durchführung desselben sind Gegenstand der Unteransprüche.

Der Erfindung liegt die Erkenntnis zugrunde, daß die Aufheizung des Mischguts während des Schnellmischvorganges schneller vonstatten geht, wenn der herrschende Umgebungsdruck wesentlich niedriger ist als der Normaldruck. Entsprechend konnte beobachtet werden, daß sich das Mischgut schneller abkühlt, wenn man den herrschenden Umgebungsdruck über den Normaldruck steigert. Druckdifferenzen von ca. 270 mB zeigten bereits brauchbare Wirkungen.

Durch die Anwendung des erfindungsgemäßen Verfahrens können die Nachteile aufgewogen werden, die sich früher ergaben, wenn man versuchte, das Mischgut in ein und demselben Behälter aufzuheizen und anschließend zu kühlen. Durch die Kompensation dieser Nachteile macht es nun die Erfindung möglich, den lang gehegten Wunsch nach Ausschaltung des Umfüllvorgangs und Vermeidung eines Kühlmischers zu befriedigen.

Weiterhin ermöglicht es die Erfindung aufgrund der Steigerung der Aufheizgeschwindigkeit, das Mischwerkzeug in seinen Maßen zu reduzieren. Es kann dadurch die sich bei Anwendung von Unterdruck während des Heißmischens einstellende Aufheizgeschwindigkeit wieder auf das ursprüngliche, bei Normaldruck und "Normalgröße" des Mischwerkzeugs geltende Maß gebracht werden. Die verringerten Werkzeugabmessungen kommen dem anschließenden Kühlmischvorgang zugute, bei dem es, wie bereits erläutert, auf eine schonende Behandlung des Gutes ankommt.

Eine Evakuierung des Behälters während des Heißmischvorgangs birgt zugleich den Vorteil in sich, als dadurch etwa aus dem Mischgut freiwerdende Gasreste, insbesondere das schädliche monomere VC-Gas, abgesaugt werden. Das Kühlen bei Überdruck bringt andererseits als vorteilhafte Möglichkeit, die zur Steigerung des Drucks bereitzustellende Luft als Kaltluft zuzuführen, womit die Kühlgeschwindigkeit gesteigert wird.

Die durch die Erfindung erzielbare Steigerung der Aufheizgeschwindigkeit ermöglicht es ferner, die Wände des Mischbehälters ständig zu kühlen, ohne daß dies auf den Heizvorgang von merklichem Nachteil ist, denn die positive Wärmeeinbringung durch Friktion mittels des Mischwerkzeugs läßt sich in jedem Falle schneller durchführen als der Wärmeentzug während des Kühlens. Daher ist es günstig, hinsichtlich der Temperierung des Mischbehälters mehr dem Kühlproblem Aufmerksamkeit zu geben als dem Heizvorgang.

Eine Vorrichtung zur Durchführung des erfindungsgemäßen Verfahrens besteht im wesentlichen aus einem allseitig geschlossenen Mischbehälter mit darin umlaufendem Mischwerkzeug, wobei Gestalt und Abmessungen, bezogen auf die Chargengröße, etwa dem eines üblichen Heizmischers entsprechen, und einer mit dem Mischbehälter verbundenen Einrichtung, mit deren Hilfe der Innenraum des Mischbehälters wahlweise unter verschiedene Luftdrücke, wie Unterdruck, Normaldruck und/oder Überdruck setzbar ist.

Der Behälter selbst ist zweckmäßigerweise weiterhin mit einer Vorrichtung zum Kühlen seiner Wände ausgestattet. Die Wände können hohl und von Kühlmittel durchströmt sein oder aber der Behälter befindet sich in einem Kühlbad. Mischer mit umlaufendem Mischwerkzeug und mit gegebenenfalls gekühlten Wänden, die für die Durchführung des erfindungsgemäßen Verfahrens geeignet sind, sind im Stand der Technik ausreichend beschrieben, so daß auf weitergehende Erläuterungen hier verzichtet werden kann.

Die Einrichtung zum Beeinflussen des Luftdrucks im Mischbehälter kann aus einer Absaugeinrichtung oder aus einem Verdichter oder aus einer Kombination von beidem bestehen, wobei von der Kombination selbstverständlich nur jeweils eine ihrer Bestandteile gleichzeitig Einsatz finden. Der Verdichter sollte zweckmäßigerweise zusätzlich mit einer Vorrichtung zur Kühlung der abgegebenen Luft versehen sein.

Besonders günstig gestaltet sich die apparative Ausführung der Erfindung in einer Tandemanordnung, bestehend aus zwei gleichartigen Mischern, die durch eine Rohrleitung miteinander verbunden sind, in denen sich eine Saug/Pumpeinrichtung und gegebenenfalls zusätzlich Kühleinrichtungen befinden. Es kann bei dieser Tandemanordnung der Betrieb derart gewählt werden, daß der eine Mischer im Kühlbetrieb läuft, während der andere im Heizbetrieb läuft mit anschließendem Wechsel der Betriebsarten. Es ist dann möglich, das aus dem einen Mischer abgesaugte Gas in den anderen Mischer zu pumpen und umgekehrt, d.h. das Gas in den Arbeitszyklen zwischen den Mischern hin- und herzupumpen. Der besondere Vorteil dieser Maßnahme liegt darin, daß für die Gasentstaubung und -entgiftung notwendige Filtereinrichtungen auf ein Minimum beschränkt oder ganz vermieden werden können, denn es ist ein geschlossenes System, aus dem nur das Behandlungsgut entnommen wird.

Besonders wichtig ist das Arbeiten in einem geschlossenen System bei der Aufbereitung von Polyvinylchloridmaterial, da dieses bei der Behandlung monomeres Vinylchloridgas freisetzt, das als krebserregender Stoff bekannt ist. Die Abgabe solchen Gases nach außen bleibt beim Arbeiten im geschlossenen System auf das unvermeidbare Mindestmaß beim Ausleiten des Behandlungsgutes aus dem Mischer beschränkt.

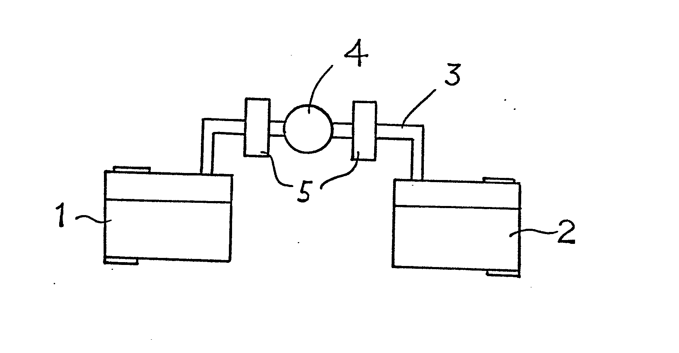

Eine Tandemanordnung der letztgenannten Art ist in der Zeichnung grob dargestellt. Sie besteht im wesentlichen aus zwei gleichartigen Mischern 1, 2 jeweils aus einem Mischbehälter mit darin umlaufendem Mischwerkzeug und Einlaß- und Auslaßeinrichtungen sowie einer Rohrleitung 3, die die Innenräume der Mischer 1, 2 am Kopf miteinander verbindet. In der Rohrleitung 3 befindet sich eine Saug/Pumpeinrichtung 4, die in der Lage ist, aus dem einen Mischer 1 einen Unterdruck zu erzeugen und dieses Gas in den anderen Mischer 2 zu pressen. Zweckmäßigerweise ist die Saug/Pumpeinrichtung 4 in ihrer Wirkungsrichtung reversibel. Zu beiden Seiten der Saug/Pumpeinrichtung 4 sind in der Rohrleitung 3 zweckmäßigerweise Kühleinrichtungen 5 angeordnet, die das von der Saug/Pumpeinrichtung 4 umgepumpte Gas kühlen. Nicht gezeigt sind die Antriebe und Steuerungseinrichtungen, auf deren Darstellung verzichtet werden kann.

Patentansprüche

1. Verfahren zum Aufheizen und anschließendem Abkühlen von rieselfähigem Gut, insbesondere von Kunststoffpolymerisatpulver, durch Einbringen von Friktionswärme mittels eines schnellumlaufenden Werkzeugs und anschließendes vergleichsweise langsames Umschichten des Gutes und Inberührungbringen desselben mit gekühlten Flächen, dadurch gekennzeichnet, daß der Umgebungsluftdruck, dem das Gut während des Aufheizens ausgesetzt ist, wesentlich niedriger gehalten ist als der Umgebungsluftdruck, dem es während des Kühlens ausgesetzt ist.

2. Verfahren nach Anspruch 1, dadurch gekennzeichnet, daß die Druckdifferenz wenigstens ca. 270 mB ist.

3. Verfahren nach Anspruch 1 oder 2, dadurch gekennzeichnet, daß während des Aufheizens das Gut einem unterhalb des atmosphärischen Normaldrucks liegenden Luftdruck ausgesetzt wird.

4. Verfahren nach einem der Ansprüche 1 bis 3, dadurch gekennzeichnet, daß während des Kühlens das Gut einem oberhalb des atmosphärischen Normaldrucks liegenden Luftdruck ausgesetzt wird.

5. Vorrichtung zur Durchführung des Verfahrens nach Anspruch 1, gekennzeichnet durch einen abgeschlossenen Behälter mit kreissymmetrischem Innenraum, in welchem wenigstens ein Mischflügel drehbar gelagert ist, und durch eine mit dem Innenraum des Behälters verbundene Einrichtung, mit deren Hilfe der Innenraum des Behälters wahlweise unter verschiedene Luftdrücke setzbar ist.

6. Vorrichtung nach Anspruch 5, dadurch gekennzeichnet, daß zwei Mischer (1, 2) mittels einer Rohrleitung (3) miteinander verbunden sind, in welcher sich eine in der Wirkungsrichtung umkehrbare Saug/Pumpeinrichtung (4) befindet.

7. Vorrichtung nach Anspruch 6, dadurch gekennzeichnet, daß sich zu beiden Seiten der Saug/Pumpeinrichtung (4) in der Rohrleitung (3) Kühleinrichtungen (5) befinden.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 292 566 (RHEINSTAHL AG) <br> * Ansprüche 1,2; Figur 1 * | 1,3,5 | B 29 B 1/06 |
| | --- | | |
| Y | AT-B- 241 129 (CHEMISCHE WERKE HÜLS AG) <br> * Gesamtes Dokument * | 1,3 | |
| | --- | | |
| Y | DE-B-1 946 030 (RHEINSTAHL AG) <br> * Ansprüche 1, 2 ; Spalte 2, Zeilen 1-5, 53-58 ; Figur 1 * | 1,5 | |
| | --- | | |
| Y | DE-A-1 604 367 (L. PAPENMEIER) <br> * Figuren 1-5 * | 5 | |
| | --- | | |
| A | DE-A-2 837 435 (F. PAPENMEIER) | | |
| | --- | | RECHERCHIERTE SACHGEBIETE (Int. Cl. ³) |
| A | DE-A-2 518 492 (F. PAPENMEIER) | | B 29 B 1/00 <br> B 29 B 3/00 |
| | ----- | | |

Der vorliegende Recherchenbericht wurde für alle Patentansprüche erstellt.

| Recherchenort <br> BERLIN | Abschlußdatum der Recherche <br> 25-02-1983 | Prüfer <br> FINDELI B.F.C |
|---|---|---|